# EUROPEAN PATENT APPLICATION

(11) **EP 1 524 616 A1**
(43) Date of publication of application: **20.04.2005**
(21) Application number: 03077546.4
(22) Date of filing: 12.08.2003
(51) Int. Cl.: G06F 17/60

(54) **Network-based method and system for anti-counterfeiting merchandise authentication**

(71) Applicant: Fast Accurate Developments Limited, Road Town, Tortola (VG)
(72) Inventor: Chu, Chia-Cheng, Teipei, Taiwan 110 (CN)
(74) Representative: Browne, Robin Forsythe, Dr.

(57) **Abstract**

In a method and system for anti-counterfeiting merchandise authentication, merchandise description data that describe characteristics of a, merchandise produced by a manufacturer and merchandise distribution data that indicate retailing status of the merchandise produced by the manufacturer fire stored in a database. An anti-counterfeiting serial coda that corresponds to the merchandise described by the merchandise description data is then generated and is provided to the manufacturer so that the manufacturer can label the anti-counterfeiting serial, code on the merchandise. Thereafter, in response to a merchandise inquiry from a consumer, merchandise authentication information is provided to the consumer. The merchandise inquiry includes the anti-counterfeiting serial code on the merchandise to be authenticated. The merchandise authentication information includes at least, the merchandise distribution data associated with the merchandise to be authenticated.

## Description

### BACKGROUND OF THE INVENTION

### 1. Field of the Invention

The invention relates to the field of merchandise authentication, more particularly to a network-based method and system for anti-counterfeiting merchandise authentication.

### 2. Description of the Related Art

Counterfeiting of expensive personal accessories and computer software has always been an important issue in the discourse of intellectual property protection.

Traditionally, channels for selling merchandise produced by a manufacturer are established through authorized distributor and retailers. Due to guarantees provided by the distributors and retailers, consumers need not worry about purchasing counterfeit merchandise from them. However, the current prevalence of e-commerce and cyber-marketing introduces complexities into the traditional selling channels, especially in occasions where second-hand and parallel imported merchandise are made available to consumers.

Due to advances in the skills of counterfeiters, when a consumer acquires merchandise from channels other than the authorized distributors and retailers, there is a high risk that counterfeit merchandise will be purchased by the consumer. Moreover, if the purchase transaction is conducted over the Internet, it will be very troublesome and sometimes impossible for the consumer to return counterfeit merchandise and ask for a refund.

### SUHHART OF TBE IHVEHTIOH

Therefore, the main object of the present invention is to provide a network-based method and system for anti-counterfeiting merchandise authentication that can minimize the risk of consumers purchasing counterfeit merchandise and that can be readily implemented.

Another object of the present invention is to provide a compute program product for configuring an authentication server equipment to perform the method of this invention.

According to a first aspect of the present invention, there is provided a method for anti-counterfeiting merchandise authentication that comprises the steps of:
a) allowing a manufacturer to establish merchandise description data in an authentication server equipment, the merchandise description data describing characteristics of a merchandise produced by the manufacturer;
b) enabling the authentication server equipment to generate an anti-counterfeiting serial code corresponding to the merchandise described by the merchandise description data;
c) providing the anti-counterfeiting serial code to the manufacturer so that the manufacturer can label the anti-counterfeiting serial coda on the merchandise;
d) allowing the manufacturer to establish merchandise distribution data in the authentication server equipment, the merchandise distribution data indicating retailing status of the merchandise produced by the manufacturer; and
e) providing merchandise authentication information to a consumer in response to a merchandise inquiry from the consumer, the merchandise inquiry including the anti-counterfeiting serial code on the merchandise to be authenticated, the merchandise authentication information including at least the merchandise distribution data associated with the merchandise to be authenticated.

According to a second aspect of the present invention, there is provided a system for anti-counterfeiting merchandise authentication that comprises:
means for allowing a manufacturer to establish merchandise description data that describe characteristics of a merchandise produced by the manufacturer;
means for generating an anti-counterfeiting serial code corresponding to the merchandise described by the merchandise description data;
means for providing the anti-counterfeiting serial code to the manufacturer so that the manufacturer can label the anti-counterfeiting serial code on the merchandise;
means for allowing the manufacturer to establish merchandise distribution data that indicate retailing status of the merchandise produced by the manufacturer; and
means for providing merchandise authentication information to a consumer in response to a merchandise inquiry from the consumer, the merchandise inquiry including the anti-counterfeiting serial code on the merchandise to be authenticated, the merchandise authentication information including at least the merchandise distribution data associated with the merchandise to be authenticated.

According to a third aspect of the present invention, there is provided a system for anti-counterfeiting merchandise authentication that comprises:
a database for storing merchandise description data that describe characteristics of a merchandise produced by a manufacturer, and merchandise distribution data that indicate retailing status of the merchandise produced by the manufacturer;
Code generating means for generation an anti-counterfeiting serial code that corresponds to the merchandise described by the merchandise description data, and that is provided to the manufacturer so that the manufacturer can label the anti-counterfeiting serial code on the merchandise; and
merchandise authentication means for providing merchandise authentication information to a consumer in response to a merchandise inquiry from the consumer, the merchandise inquiry including the anti-counterfeiting serial code on the merchandise to be authenticated, the merchandise authentication information including at least the merchandise distribution data associated with the merchandise to be authenticated.

According to a fourth aspect of the present invention, there is provided a system comprising an authentication server equipment loaded with a computer program product that causes the authentication server equipment to perform steps for anti-counterfeiting merchandise authentication, the steps including:
a) allowing a manufacturer to establish merchandise description data in the authentication server equipment, the merchandise description data describing characteristics of a merchandise produced by the manufacturer;
b) enabling the authentication server equipment to generate an anti-counterfeiting serial code corresponding to the merchandise described by the merchandise description data;
c) providing the anti-counterfeiting serial code to the manufacturer so that the manufacturer can label the anti-counterfeiting serial code on the merchandise;
d) allowing the manufacturer to establish merchandise distribution data in the authentication server equipment, the merchandise distribution data indicating retailing status of the merchandise produced by the manufacturer; and
e) providing merchandise authentication information to a consumer in response to a merchandise inquiry from the consumer, the merchandise inquiry including the anti-counterfeiting serial code on the merchandise to be authenticated, the merchandise authentication information including at least the merchandise distribution data associated with the merchandise to be authenticated.

According to a fifth aspect of the present invention, there is provided a computer program product for configuring an authentication server equipment to perform steps for anti-counterfeiting merchandise authentication, the steps comprising:
a) allowing a manufacturer to establish merchandise description data in
   the authentication server equipment, the merchandise description data describing characteristics of a merchandise produced by the manufacturer;
b) enabling the authentication server equipment to generate an anti-counterfeiting serial code corresponding to the merchandise described by the merchandise description data;
c) providing the anti-counterfeiting serial code to the manufacturer so that the manufacturer can label the anti-counterfeiting serial code on the merchandise;
d) allowing the manufacturer to establish merchandise distribution data in the authentication server equipment, the merchandise distribution data indicating retailing status of the merchandise produced by the manufacturer; and
e) providing merchandise authentication information to a consumer in response to a merchandise inquiry from the consumer, the merchandise inquiry including the anti-counterfeiting serial code on the merchandise to be authenticated the merchandise authentication information including at least the merchandise distribution data associated with the merchandise to
   be authenticated.

### BRIEF DESCRIPTION OF THE DRAWINGS

Other features and advantage of the present invention will become apparent in the following detailed description of the preferred embodiment with reference to the accompanying drawings, of which:
Figure 1 is a schematic diagram of the preferred embodiment of a network-based system for anti-counterfeiting merchandise authentication
   according to the present invention;
Figures 2 and 3 are flowcharts to illustrate steps of the preferred embodiment of a network-based method for anti-counterfeiting merchandise authentication according to the present invention;
Figure 4 is a schematic block diagram illustrating the relationship among a primary database and other devices in the network-based system of the preferred embodiment;
Figure 5 illustrates an exemplary anti-counterfeiting serial code generated in the preferred embodiment; and
Figure 6 illustrate merchandise labeled with the anti-counterfeiting serial code of Figure 5 in accordance with the preferred embodiment of this invention.

### DETAILED DESCRIPTION OF TEE PREFERRED EMBODIMENT

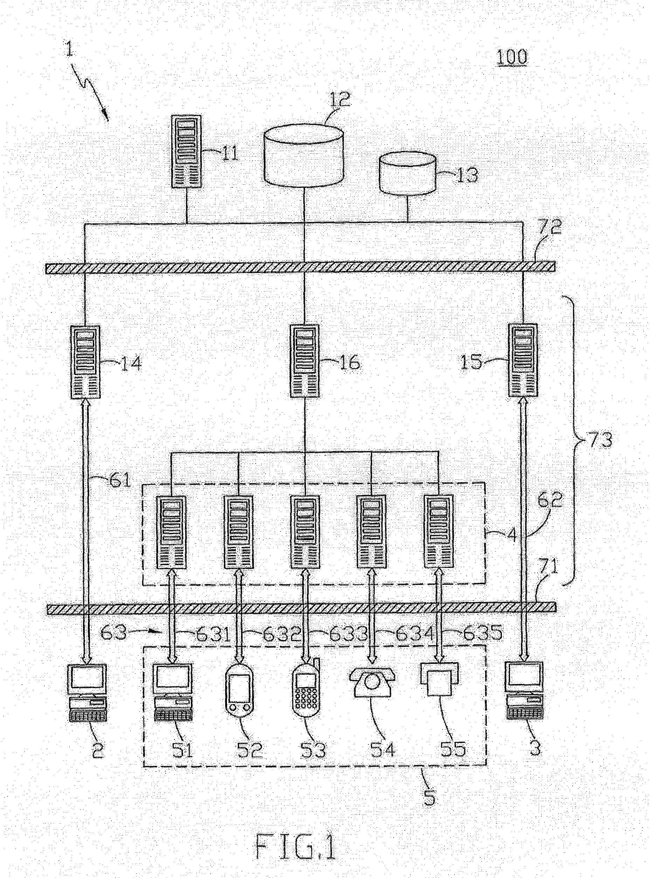

Referring to Figure 1, the preferred embodiment of a system 100 for anti-counterfeiting merchandise authentication according to the present invention is shown to include an authentication server equipment 1,
a manufacturer terminal device 2 for use by a merchandise manufacturer, a retailer terminal device 3 for use by a merchandise retailer, an inquiry proxy server 4, and a consumer terminal device 5. The manufacturer, retailer
and consumer terminal devices 2, 3, 5 are connected to and transmit information with the authentication server equipment 1 through information networks 61, 62, 63,respectively.

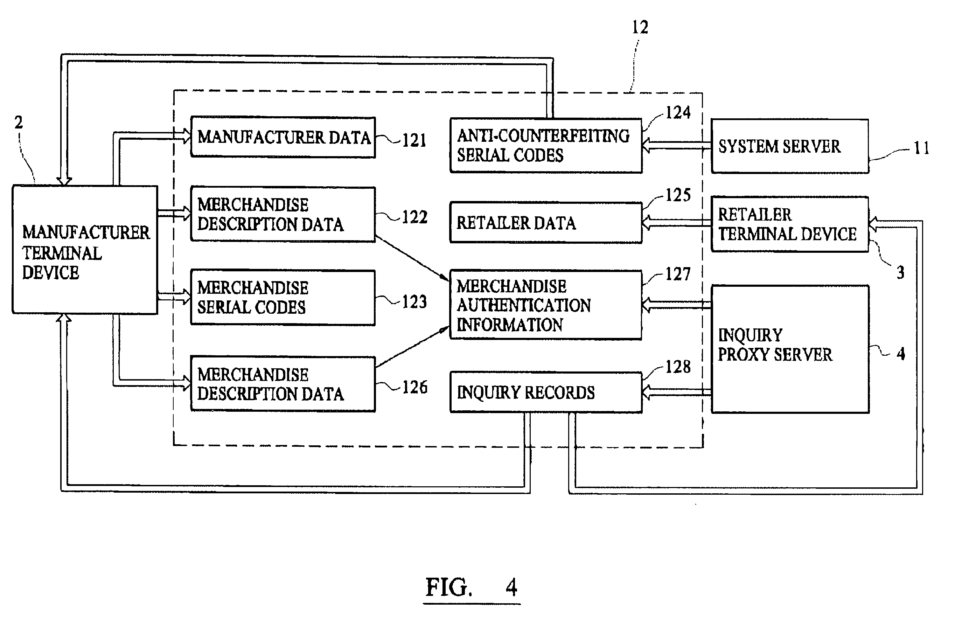

In this embodiment, the authentication server equipment 1 is provided in a distributed framework, and includes a. system server 11, a primacy database 12, a backup database 13, a manufacturer server 14, a retailer server 15, and an inquiry server 16. The system server 11 is mainly provided with an operating system and application programs required for operation of the authentication server equipment 1, and is managed by a system administrator. In this embodiment, the primacy database 12 and the backup database 13 may be embodied in hard disks. However, it should be noted that floppy disks, magnetic storage media like magnetic tapes, optical storage media like optical discs, or other fixed or removable types of storage media may be used as well. As shown in Figure 4, the primary database 12 is used
to store manufacturer data 121, merchandise description data 122, merchandise serial code 123, anti-counterfeiting serial codes 124, retailer data 125,
merchandise distribution data 126, merchandise authentication information 127 , and inquiry records 128 . The primary database 12 accepts the manufacturer data121, the merchandise description data 122, the merchandise serial codes 123, and the merchandise distribution data 126 from the manufacturer terminal device 2 , accepts the retailer data 125 from the retailer terminal device 3. and accepts the anti-counterfeiting serial codes 124 from the system server 11 for subsequent retrieval by the manufacturer terminal device 2. The
primary database 12 further accepts the inquiry records 128, which may be provided to the manufacturer and retailer terminal devices 2, 3, from the inquiry proxy server 4. The merchandise authentication information 127 is generated from the merchandise description data 122 and the merchandise distribution data 126, and is provided to the inquiry proxy server 4. The backup database 13 is used for automatic periodic backup of the data stored in the primary database 12 through the control of the system server 11.

As shown in Figure 1, in consideration of network security, an external firewall 71 is configured for connecting the manufacturer server 14, the retailer server 15 and the inquiry proxy server 4 to the manufacturer terminal device 2, the retailer terminal device 3 and the consumer terminal device 5, respectively. Moreover, an internal firewall 72 is configured for connecting the manufacturer server 14, the retailer server 15 and the inquiry server 16 to the system server 11, the primary database 12 and the backup database 13.
As such, a De-Militarized Zone (DMZ) 731 a formed between the external and internal firewalls 71, 72 for protecting the authentication server equipment 1 from vicious intrusions or assaults coming from the manufacturer terminal device 2, the retailer terminal device 3 or the consumer terminal device 5. Since the aforesaid firewall mechanism is a well-known art and is not pertinent to the claimed invention, details thereof will not be described herein for the sake of brevity.

The manufacturer server 14, the retailer server 15 and the inquiry server 16 are connected to the manufacturer terminal device 2, the retailer terminal device 3 and the consumer terminal device 5, respectively, and are further connected to the primary database 12 for uploading information and inquiry requests of the terminal devices 2, 3, 5 to the primacy database 12,:and for downloading data presentable for user Interface with the terminal devices 2, 3, 5 from the primary database 12.

In this embodiment, each of the manufacturer terminal device 2 and the retailer terminal device 3 is embodied in a personal computer, and the information networks 61, 62 are exemplified using the Internet. However, in practice, a Wide Area Network (WAN) or a Local Area Network {LAN} can function as well. The physical connections of the information networks 61, 62 can be established through a conventional Asymmetric Digital Subscriber Line (ADSL) modem, a dial-tip modem, or a wideband cable modem in combination with compatible communication lines, such as an Integrated Services Digital Network (ISDH) service line, a Tl leased line, other types of wired or wireless communication lines, etc.

As shown in Figure 1, the consumer terminal device 5 may be in the form of a personal computer 51, a Personal. Digital Assistant (PDA) 52, a mobile phone 53, an ordinary telephone set 54 and a fax machine 55, which are connected to a respective compatible transmission line, such as a wired Internet connection 631 , a wireless Internet connection 632, a cellular phone communication network 623 such as General Packet Radio Service (GPRS) system, Code-Division Multiple Access {CDMA} system, etc., a Public Switched Telephone Network {FSTN} system 624 for voice information transmission, and a Public Switched Telephone Network (PSTN) system 625 for text information transmission. The aforesaid configurations permit consumers (i.e., inquirers) to be capable of flexibly using various types of consumer terminal devices 5 having varying inputs and responses when making inquiries, such on-line network inquiries through a personal computer or a PDA via wired or wireless communication such as through the Bluetooth protocol, inquiries through a mobile phone via Wireless Application Protocol (WAP) or short message, key pad-controlled inquiries through an ordinary telephone set via Automatic Call Attendant Service, text-based inquiries through a fax machine via Fax Automated Answering Service, or other types of inquiries applicable to the consumer terminal devices S.

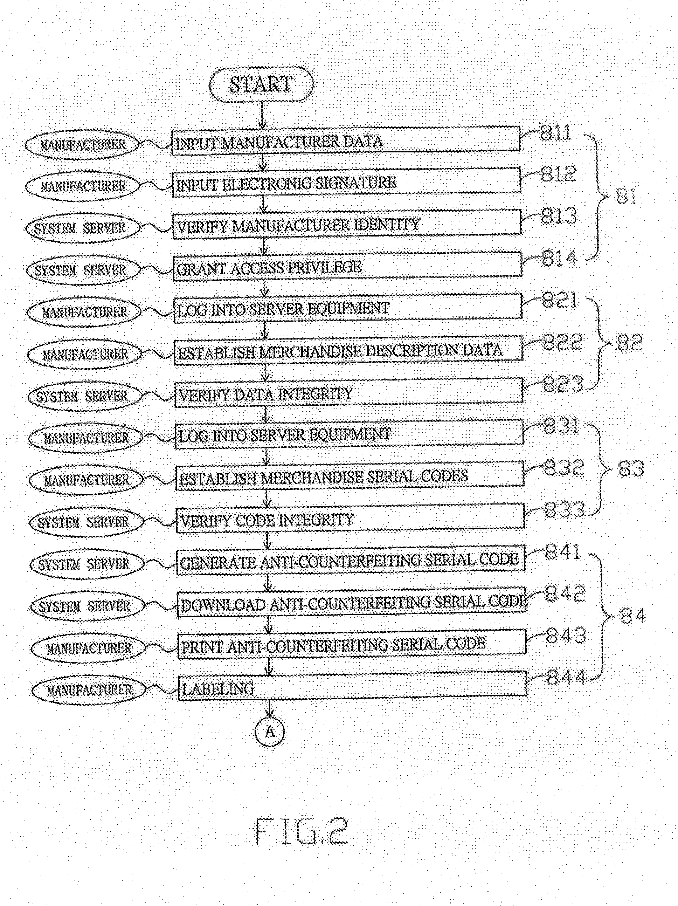

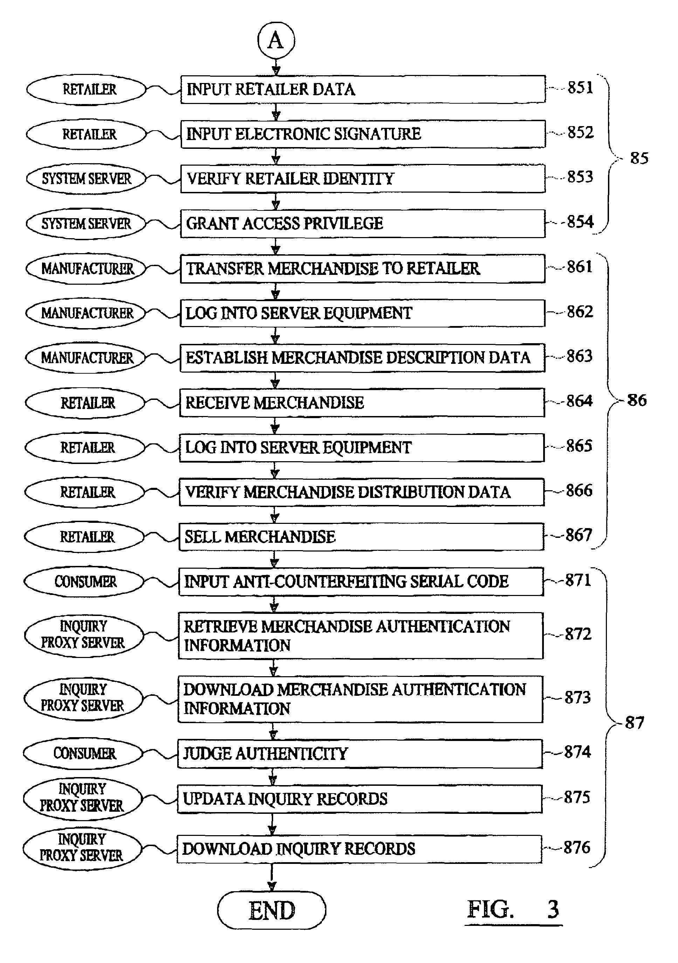

Figures 2 and 3 are flowcharts to illustrate steps of the preferred embodiment of a network-based method for anti-counterfeiting merchandise authentication according to the present invention. The method is realized by the system 100 of Figure 1, and includes a major step 81 for establishing the manufacturer data 121 (see Figure 4), a major step 82 for establishing the merchandise description data 122 (see Figure 4) , a major step 83 for establishing the merchandise serial codes 123 (see Figure 4), a major step 84 for generating the anti-counterfeiting serial codes 124 (see Figure 4) , a major step 85 for establishing the retailer data 125 (see Figure 4), a major step 86 for establishing the merchandise distribution data 126 (see Figure 4),and a major step 87 for handling merchandise inquiries. The major step 81 includes first to fourth sub-steps 811-814. In sub-step 811, the manufacturer logs into the authentication server equipment 1 in a conventional manner for registration and for entry of manufacturer identification information, which can be used as a basis when determining manufacturer access privilege to the authentication server equipment 1 during subsequent use of the system 100. The manufacturer establishes the manufacturer data 121 to be stored in the primary database 12. In this embodiment, the manufacturer data 121 includes an identification code (such as uniform invoice code) of the manufacturer, a, password, an electronic signature, a name of the manufacturer, basic information (such as telephone number, fax number, e-mail address, geographic address, etc) of the
manufacturer, access privilege of the manufacturer, a location of the manufacturer, etc. Thereafter, in sub-step 812, the manufacturer accesses the primary database 12 through a user interface (such as an Internet browser) of the manufacturer terminal device 2 via the manufacturer server 14, and subsequently Inputs an electronic signature. Then, in sub-step 813, the system server 11 verifies the identity of the manufacturer and, after successful confirmation, in sub-step 814, grants access privilege to the manufacturer for managing the data in the authentication server equipment 1.

The major step 82 includes first to third sub-steps 821-823. In sub-step 821, the manufacturer logs into the authentication server equipment 1. After a successful login, in sub-step 822, the manufacturer establishes the merchandise description data 122 in the primary database 12. The merchandise description data 122 describes characteristics of merchandise produced by the manufacturer. In this embodiment, the merchandise description data 122 includes at least one of a name of the merchandise, a specification (such as size. weight, shape, volume, color, etc.) of the merchandise, a name of the manufacturer, a, retailing area of the merchandise, a manufacturing date of the merchandise, a suggested retail price of the merchandise, s manufacturing
location of the merchandise, an expiry date of the merchandise, an identification code of the merchandise, an identification code of the manufacturer, etc. Then, in sub-step 823, the system server 11 will verify the integrity of the merchandise description data 122 before the latter Is stored in the primary database 12.

The major step 83 includes first to third sub-steps 831-833. In sub-step 831, the manufacturer logs into the authentication server equipment 1. After a successful login, in sub-step 832, the manufacturer establishes the merchandise serial codes 123 corresponding to the aforesaid merchandise description data 122 for storage in the primary database 12. In this embodiment, each merchandise serial code 123 includes at Least one of a manufacturer identification code, a merchandise identification code, a retailer identification code , an anti-counterfeiting code issued by the manufacturer, a social code identifiable by the program applications of the system server 11,etc. Then, in sub-step 833, the system server 11 will verify the integrity of each merchandise serial code 123 before the latter can he stored in the primary database 12.

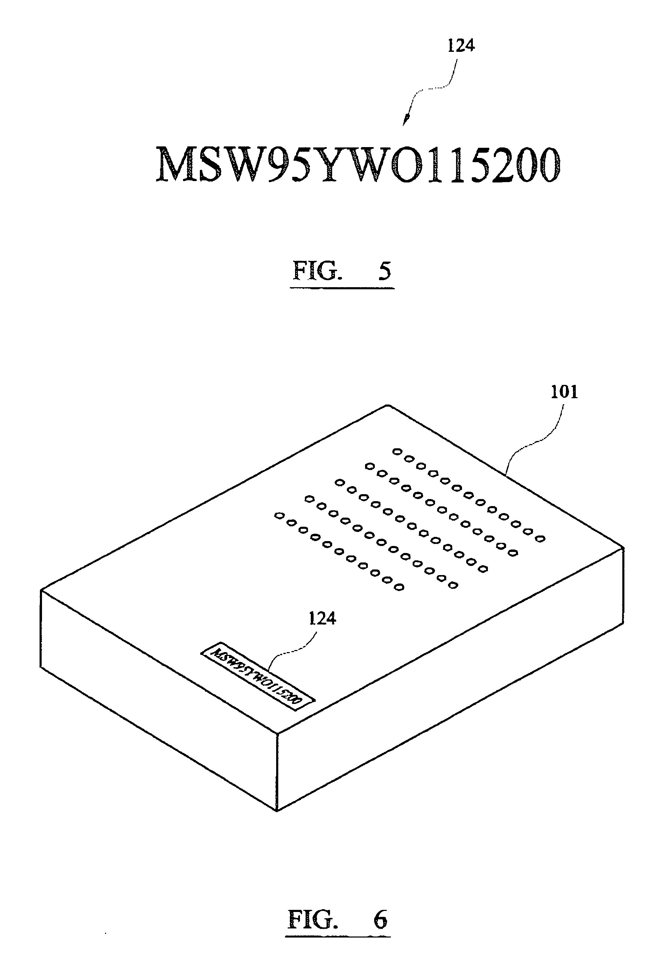

The major step 84 includes first to fourth sub-steps 841-844. In sub-step 641.the system server 11 generates the anti-counterfeiting serial codes 124 corresponding to the aforesaid merchandise serial codes 123, and stores
the same in the primary database 12. The anti-counterfeiting serial code 124 could be entirely or partly identical to the corresponding merchandise
serial code 123, or could be any unique combination of symbol, alphabets and digits having a one-to-one correspondence with the corresponding merchandise
serial coda 123. Figure 5 illustrates an exemplary anti-counterfeiting serial code 124 generated in the preferred embodiment, where "MS", "W95", "TW01" and
"15200" represent a manufacturer identification code, a merchandise identification code, a retailer identification code, and an anti-counterfeiting code, respectively.

In sub-step 842, the system server 11 provides the anti-counterfeiting serial codes 124 to the manufacturer terminal device 2. In sub-step 843, the
manufacturer prints the anti-counterfeiting serial codes 124. In sub-step 844, the manufacturer labels the anti-counterfeiting serial codes 124 on the corresponding merchandise.

Figure 6 illustrates merchandise, in the form of a package 101 of a computer software product, labeled with the anti-counterfeiting serial code 124 of Figure 5 in accordance with the preferred embodiment of this invention, in the example of Figure 6, labeling is accomplished by printing the
anti-counterfeiting serial code 124 on a sticker, and by adhering the sticker
on the package 101. In practice, labeling should not be limited to forms visible to the naked eye. It is also feasible to label merchandise with the anti-counterfeiting serial code 124 in a machine-readable form.

The major step 85 includes first to fourth sub-steps 851-854. In sub-step 851, the retailer logs into the authentication server equipment 1 in a conventional manner for registration and for entry of retailer identification information, which can be used as a basis when determining retailer access privilege to the authentication server equipment 1 during subsequent use of the system 100 . The retailer establishes the retailer data 125 to be stored in the primary database 12. In this embodiment, the retailer data 125 includes an identification code (such as uniform invoice code) of the retailer, a password, an electronic signature, a name of the retailer, basic information {such as telephone number, fax number, e-mail address, geographic address, etc. } of the retailer, access privilege of the retailer, a location of the retailer, etc. Thereafter, in sub-step 852, the retailer accesses the primacy database 12 through a user interface (such as an internet browser) of the retailer terminal device 3 via the retailer server 15, and subsequently Inputs
an electronic signature. Then, in sub-step 853, the system server 11 verifies the identity of the retailer and, after successful confirmation, in sub-step 854,grants access privilege to the retailer.

The major step 86 includes first to seventh sub-steps 861-867. In sub-step 861, the manufacturer transfers the merchandise to a designated retailer. In sub-step 862, the manufacturer logs into the authentication server equipment 1 using the
anti-counterfeiting serial, codes 124 on the transferred merchandise. After a successful login, in sub-step 863, the manufacturer
establishes the merchandise distribution data 126 for storage in the primary database 12. In this embodiment, the merchandise distribution data 126 includes, aside from the merchandise serial and identification codas
and the manufacturer identification code, a retailer identification coder a name of the retailer, a delivery date of the merchandise, a manufacturer-confirmed serial code, a, retailer-confirmed aerial code, and a sale confirmation serial coda identifiable by the application programs or the system server 11.

Then, after the designated retailer receives the transferred merchandise in sub-step 864, the designated retailer logs into the authentication server equipment 1 in sub-step 865 using the anti-counterfeiting serial codes 124 on the transferred merchandise to obtain the relevant merchandise distribution data 126. In sub-step 866, the designated retailer verifies the merchandise
distribution data 126. Finally, in sub-step 867, the designated retailer begins sailing the merchandise to consumers.
The major step 87 includes first to sixth glib-steps 871-876. In sub-step 871, a consumer generates a merchandise inquiry by inputting the anti-counterfeiting- serial code 124 on a merchandise to be authenticated through a user interface (such as an Internet browser) of the consumer terminal device 5 for reception by the inquiry proxy server 4. Then, in sub-step 872, the inquiry proxy server 4 retrieves from the primary database 12 the merchandise authentication information 127 corresponding to the anti-counterfeiting serial code 124. In, this embodiment, the merchandise authentication information 127 includes at least one of the name of the merchandise, the specification of the merchandise, the name of the manufacturer, the manufacturing date of the merchandise, the expiry date or the merchandise, the name of the design a tad r<tailor in the merchandise distribution data 126, the number of inquiries made in connection with the anti-counterfeiting aerial code 124 on the merchandise to be authenticated and accumulated by the inquiry proxy server 4, the date of a latest previous
one of the inquiries made in connection with the anti-counterfeiting serial code 124 on the merchandise to be authenticated and recorded in the inquiry proxy server 4, etc.

In sub-step 873, the inquiry proxy server 4 provides the merchandise authentication information 127 to the consumer terminal device 5. Then, in sub-step 874, the consumer judges the authenticity of the merchandise
based on the merchandise authentication information 127. For instance, an unreasonably high number of inquiries made for the same anti-counterfeiting serial code 124 is a good indication of the presence of counterfeiting.
In sub-step 875 the inquiry proxy server 4 will automatically update the inquiry records 128 associated with the anti-counterfeiting serial code 124. In this embodiment, each inquiry recode 128 includes the merchandise serial code 123, number of inquiries made, inquiry dates, inquiry sources (for example, an IP address), presence of abnormality (e. g., the number of inquiries is larger than a default value), and merchandise conditions (for instance, location of the merchandise and expiry date of the merchandise), etc.
Finally, in sub-step 876, the inquiry proxy server 4 periodically transmits the inquiry records 128 to the manufacturer and retailer terminal devices 2, 3 for reference by both the manufacturer and the retailer when
determining the existence of counterfeit merchandise and the source thereof.

It is apparent from the foregoing that the network-based method and system for anti-counterfeiting merchandise authentication of this invention provides a speedy channel for consumers to retrieve merchandise authentication information for reference when judging the authenticity of merchandise. Accordingly the rights of consumers, manufacturers and retailers can be adequately protected by the method and system of this invention.

Moreover, to put the invention into practice, it is only necessary to configure component of the authentication server equipment 1 with a proprietary computer program product, in view of the accessibility
of the hardware involved and the convenience of present communication networks, consumers, manufacturers and retailers can easily utilize the anti-counterfeiting mechanism of this invention any where and any time on almost any known communication device.

Finally, his invention provides a vehicle for consumers, manufacturers and retailers to interact easily and conveniently through networks and servers
with minimum technical or knowledge barriers. The
anti-counterfeiting mechanism of this Invention is both flexible and relatively easy to implement,

While the present invention has been described in connection with what is considered the most practical and preferred embodiment, it is understood that this invention is not limited to the disclosed embodiment but is intended to cover various arrangements included within the spirit and scope of the broadest interpretation so as to encompass all such modifications and equivalent arrangements.

## Claims

**1.** A method for anti-counterfeiting merchandise authentication, comprising the steps of:
a) allowing a manufacturer to establish merchandise description data in an authentication server equipment, the merchandise description data describing characteristics of a merchandise produced by the manufacturer;
b) enabling the authentication server equipment to generate an anti-counterfeiting serial code corresponding to the merchandise described by the merchandise description data;
c) providing the anti-counterfeiting serial code to the manufacturer so that the manufacturer can label the anti-counterfeiting serial code on the merchandise;
d) allowing the manufacturer to establish merchandise distribution data In the authentication server equipment, the merchandise distribution data
indicating retailing status of the merchandise produced by the manufacturer and
e) providing merchandise authentication information to a consumer in response to a merchandise inquiry from the consumer, the merchandise inquiry including the anti-counterfeiting serial code on the merchandise to
be authenticated, the merchandise authentication information including at least the merchandise distribution data associated with the merchandise to
be authenticated.

**2.** The method as claimed in Claim 1, further comprising, before step a) , the step of verifying identity of the manufacturer before permitting the manufacturer to manage the data in the authentication, server equipment.

**3.** The method as claimed in Claim 1, wherein the merchandise description data includes at least one of a name of the merchandise, a specification of the
merchandise, a name of the manufacturer, a retailing area of the merchandise, a manufacturing date of the merchandise, a suggested retail price of the merchandise, a manufacturing location of the merchandise, an expiry date of the merchandise, an identification code of the merchandise, and an identification code of the manufacturer.

**4.** The method as claimed in Claim 1, wherein the merchandise description data established in the authentication server equipment in step a) includes a merchandise serial code, and the anti-counterfeiting serial code is generated in step b) in accordance with the merchandise serial code.

**5.** The method as claimed in Claim 4, wherein the merchandise serial code includes at least one of a manufacturer identification code, a merchandise
identification code, and an anti-counterfeiting code issued by the manufacturer.

**6.** The method as claimed in Claim 4, wherein the anti-counterfeiting serial code is identical to the merchandise serial code.

**7.** The method as claimed in Claim 1, further comprising the step of allowing a retailer distributed with the merchandise from the manufacturer to verify the merchandise distribution data in the authentication server equipment.

**8.** The method as claimed in Claim 7, further comprising the step of verifying identity of the retailer before permitting the retailer to gain access to the merchandise distribution data in the authentication server equipment.

**9.** The method as claimed in Claim 8, wherein the merchandise distribution data includes at least one of a retailer identification code, a name of the retailer, and a delivery date of the merchandise.

**10.** The method as claimed in Claim 1, wherein the merchandise authentication information further includes the merchandise description data associated with the merchandise to be authenticated.

**11.** The method as claimed in Claim 10, wherein the merchandise authentication information includes at least one of a name of the merchandise, a specification
of the merchandise, a name of the manufacturer, a manufacturing date of the merchandise, an expiry data of the merchandise, and a name or the retailer.

**12.** The method as claimed in Claim 1, further comprising the step of recording a number of inquiries made in connection with the anti-counterfeiting serial code on the merchandise to be authenticated.

**13.** The method as claimed in Claim 12, wherein the number of inquiries made in connection with the anti-counterfeiting aerial code on the merchandise to
be authenticate is included in the merchandise authentication information.

**14.** The method as claimed in Claim 13, wherein the date of a latest previous one of the inquiries made in connection with the anti-counterfeiting serial code on the merchandise to be authenticated is further included in the merchandise authentication information.

**15.** The method as claimed in Claim 12, further comprising the step of reporting the number of inquiries made in connection with the anti-counterfeiting serial code on the merchandise to be authenticated to the manufacturer.

**16.** A system for anti-counterfeiting merchandise authentication, comprising:
means for allowing a manufacturer to establish merchandise description data that describe characteristics of a merchandise produced by the
manufacturer;
means for generating an anti-counterfeiting serial code corresponding to the merchandise described by the merchandise description data;
means for providing the anti-counterfeiting serial code to the manufacturer so that the manufacturer can label the anti-counterfeiting serial code on the
merchandise;
means for allowing the manufacturer to establish merchandise distribution data that indicate retailing status or the merchandise produced by the manufacturer; and
means for providing merchandise authentication information to a consumer in response to a merchandise inquiry from the consumer, the merchandise inquiry
including the anti-counterfeiting serial code on the merchandise to be authenticated, the merchandise authentication information including at least the merchandise distribution data associated with the merchandise to be authenticated.

**17.** A system for anti-counterfeiting merchandise authentication, comprising:
a database for storing merchandise description data that describe characteristics of a merchandise produced by a manufacturer, and merchandise distribution data that indicate retailing status of the merchandise
produced by the manufacturer;
code generating means for generating an anti-counterfeiting serial code chat corresponds to the merchandise described by the merchandise description
data, and that is provided to the manufacturer so that the manufacturer can label the anti-counterfeiting serial code on the merchandise; and
merchandise authentication means for providing merchandise authentication information to a consumer in response to a merchandise inquiry from the consumer, the merchandise inquiry including the anti-counterfeiting serial code on the merchandise to be authenticated, the merchandise authentication information including at least the merchandise distribution data associated with the merchandise to be authenticated.

**18.** A system comprising an authentication server equipment loaded with a computer program product that causes the authentication server equipment to perform steps for anti-counterfeiting merchandise authentication, the steps including;
a) allowing a manufacturer to establish merchandise description data in the authentication server equipment, the merchandise description data describing characteristics of a merchandise produced by the manufacturer;
b) enabling the authentication server equipment to generate an anti-counterfeiting serial corresponding to the merchandise described by the
merchandise description data;
c) providing the anti-counterfeiting serial code to the manufacturer so
that the manufacturer can label the anti-counterfeiting serial code on the merchandise;
d) allowing the manufacturer to establish merchandise distribution data in the authentication server equipment, the merchandise distribution data
indicating retailing status of the merchandise produced by the manufacturer; and
e) providing merchandise authentication information to a consumer in response to a merchandise inquiry from the consumer, the merchandise inquiry including the anti-counterfeiting serial code on the merchandise to be authenticated, the merchandise authentication information including at least the merchandise distribution data associated with the merchandise to be authenticated.

**19.** A computer program product for configuring an authentication server equipment to perform steps for anti-counterfeiting merchandise authentication, the steps comprising:
a) allowing a manufacturer to establish merchandise description data in the authentication server equipment, the merchandise description data describing characteristics of a merchandise produced by the manufacturer;
b) enabling the authentication server equipment to generate an anti-counterfeiting serial code corresponding to the merchandise described by the merchandise description data;
c) providing the anti-counterfeiting serial code to the manufacturer so that the manufacturer can label the anti-counterfeiting serial coda on the merchandise;
d) allowing the manufacturer to establish merchandise distribution data in the authentication server equipment, the merchandise distribution data
indicating retailing status of the merchandise produced by the manufacturer; and
e) providing merchandise authentication information to a consumer in response to a merchandise inquiry from the consumer, the merchandise inquiry including the anti-counterfeiting serial code on the merchandise to be authenticated, the merchandise authentication information including at least the merchandise distribution data associated with the merchandise to
be authenticated.

**20.** The computer program product as claimed in Claim 19, wherein the steps for anti-counterfeiting merchandise authentication further comprise, before
step a) , the step of verifying identity of the manufacturer before permitting the manufacturer to manage the data in the authentication server equipment.

**21.** The computer program product as claimed in Claim 19, wherein the merchandise description data includes at least one of a name of the merchandise, a specification of the merchandise, a name of the manufacturer, a retailing area of the merchandise, a manufacturing date of the merchandise, a suggested retail price of the merchandise, a manufacturing location of the merchandise, an expiry date of the merchandise, an identification code of the merchandise, and an identification code of the manufacturer.

**22.** The computer program product as claimed, in Claim 19, wherein the merchandise description data established in the authentication server equipment instep a) includes a merchandise serial code, and the anti-counterfeiting serial code is generated in step b) in accordance with the merchandise serial code. 23. The computer program product as claimed in Claim 22, wherein the merchandise serial code includes at least one of a manufacturer identification code, a merchandise identification code, and an anti-counterfeiting code issued by the manufacturer.

**24.** The computer program product as claimed in Claim 22, wherein the anti-counterfeiting serial code is identical to the merchandise serial code.

**25.** The computer program product as claimed in Claim 19, wherein the steps for anti-counterfeiting merchandise authentication further comprise the step
of allowing a retailer distributed with the merchandise from the manufacturer to verify the merchandise distribution date in the authentication server
equipment. 26. The computer program product as claimed in Claim 25, wherein the steps for anti-counterfeiting merchandise authentication further comprise the step of verifying identity of the retailer before permitting the retailer to gain access to the merchandise distribution data in the authentication serve equipment.

**27.** The computer program product as claimed in Claim 25, wherein the merchandise distribution data includes at least one of a retailer identification code, a name of the retailer, and a delivery date of the merchandise.

**28.** The computer program product as claimed in Claim 19, wherein the merchandise authentication information further includes the merchandise description data associated with the merchandise to be authenticated.

**29.** The computer program product as claimed in Claim 28, wherein the merchandise authentication information includes at least one of a name of the merchandise, a specification of the merchandise, a name of the manufacturer, a manufacturing data of the merchandise, an expiry date of the merchandise, and a name of the retailer.

**30.** The computer program product as claimed in Claim 19, wherein the steps for anti-counterfeiting merchandise authentication further comprise the step
of recording a number of inquiries made in connection with the anti-counterfeiting serial code no the merchandise to be authenticated.

**31.** The computer program product as claimed in Claim 30, wherein the number of inquiries made in connection with the anti-counterfeiting serial code on the merchandise to be authenticated is included in the merchandise authentication information.

**32.** The computer program product as claimed in Claim 31, wherein the date of a latest previous one of the inquiries made in connection with the anti-counterfeiting serial code on the merchandise to be authenticated is further included in the merchandise authentication information.

**33.** The computer program product as claimed in Claim 30, wherein the steps for anti-counterfeiting merchandise authentication further comprise the step
of reporting the number of inquiries made in connection with the anti-counterfeiting serial code on the merchandise to be authenticated to the manufacturer.
